Europäisches Patentamt

European Patent Office

Office européen des brevets

(11) Numéro de publication : **0 348 266 B1**

(12) **FASCICULE DE BREVET EUROPEEN**

(45) Date de publication du fascicule du brevet :
**18.03.92 Bulletin 92/12**

(51) Int. Cl.$^5$ : **G01D 5/44,** F15B 5/00

(21) Numéro de dépôt : **89401618.7**

(22) Date de dépôt : **12.06.89**

(54) **Détection d'une feuille de verre.**

(30) Priorité : **17.06.88 FR 8808136**

(43) Date de publication de la demande :
**27.12.89 Bulletin 89/52**

(45) Mention de la délivrance du brevet :
**18.03.92 Bulletin 92/12**

(84) Etats contractants désignés :
**AT BE CH DE ES FR GB IT LI LU NL SE**

(56) Documents cités :
**US-A- 3 482 954
ÖLHYDRAULIK UND PNEUMATIK, vol. 22, no.
7, juillet 1978, pages 397-400; P. WIEDMANN et
al.: "Betriebsverhalten fluidischer Strahlun-
terbrecher-Schalter"
ÖLHYDRAULIK UND PNEUMATIK, vol. 20, no.
3, mars 1976, pages 138-148; P. WIEDMANN et
al.: "Experimentelle Untersuchungen an fluidischen Ringstrahl-Sensoren"
VDI-ZEITSCHRIFT, vol. 130, no. 4, April 1988,
pages 36-41, Düsseldorf, DE; K. MALLE:
"Pneumatisches Messen: Im Speziellen unübertroffen"**

(73) Titulaire : **SAINT-GOBAIN VITRAGE
INTERNATIONAL
18, avenue d'Alsace
F-92400 Courbevoie (FR)**

(72) Inventeur : **Boutier, Philippe
29, Drève du Mérault
B-1410 Waterloo (BE)**
Inventeur : **Mathivat, Denis
7, avenue du Gros Buisson
F-60150 Thourotte (FR)**
Inventeur : **Plebani, Dany-Ange
Rue de la Montagne
F-60150 Thourotte (FR)**
Inventeur : **Vanaschen, Luc
Binsterweg 11-3
B-4700 Eupen (BE)**
Inventeur : **Kuster, Hans-Werner
Schervierstrasse 20
W-5100 Aachen (DE)**
Inventeur : **D'Iribarne, Benoit
Am Pannhaus 7
W-5100 Aachen (DE)**
Inventeur : **Havenith, Hubert
Hauptstrasse 295
W-5102 Würselen (DE)**

(74) Mandataire : **Menes, Catherine et al
SAINT-GOBAIN RECHERCHE 39, Quai Lucien
Lefranc
F-93300 Aubervilliers (FR)**

# Description

L'invention a trait à la détection précise d'une feuille de verre en mouvement, notamment d'une feuille de verre échauffée au-delà de sa température de déformation dans un four traversant.

L'invention s'applique plus particulièrement aux installations de bombage et/ou de traitements thermiques de feuilles de verre par exemple en vue de l'obtention de vitrages automobiles.

Pour concilier des cadences de production de plus en plus rapides et des formes de bombage de plus en plus complexes, il devient nécessaire de connaître de plus en plus précisément la position donnée d'une feuille de verre en cours de traitement. Ceci par exemple pour anticiper le déplacement d'un organe ou sa mise en fonctionnement ; on peut ainsi initier le mouvement d'amenée d'un cadre de récupération du verre avant même que la feuille ne soit soulevée au-dessus de son transporteur ou débuter le soufflage de trempe dès que la feuille est dirigée vers la cellule de trempe. Dans tous les cas, on aboutit à une suppression totale ou partielle des temps morts.

D'autre part, plus les formes désirées sont complexes et plus la précision du positionnement du vitrage doit être grande ce qui nécessite bien sûr une connaissance préalable de sa position.

Toutes ces considérations tendent au développement de systèmes de détection du verre à la fois très précis et très fiables. Ces systèmes de détection ne doivent pas entraîner de marquage des feuilles qui sont à une température supérieure à la température de déformation de sorte que tout contact avec un organe solide peut être à l'origine d'un défaut optique du vitrage. Or, pour un vitrage de grande qualité, celui-ci ne peut être toléré, même dans les zones marginales, car les vitrages automobiles sont souvent montés affleurants, collés directement sur la carrosserie et de ce fait toute leur surface est visible extérieurement.

Les détecteurs optiques usuels qui repèrent la coupure d'un rayon lumineux dirigé en travers du chemin parcouru par les feuilles de verre sont insuffisamment fiables dans les conditions de températures rencontrées. En effet à une telle température, voisine par exemple de 700 C dans une installation de bombage-trempe, les rayons lumineux subissent une forte diffraction et surtout toute variation de la température de l'enceinte, même de faible amplitude, entraîne une modification de l'angle de diffraction de sorte que le rayon n'est plus intercepté par la cellule réceptrice ce qui fait croire de façon erronée au passage d'une feuille de verre.

Il est également connu de la demande de brevet allemand 36 38 659 de détecter une feuille de verre par un barrage lumineux fonctionnant en réflexion dont la tête de mesure est placée à proximité du trajet du verre et est connectée par l'intermédiaire d'une optique en fibre de verre à un module photoélectrique placé lui à l'extérieur de l'enceinte chaude. Le trajet libre du rayon lumineux, c'est-à-dire le trajet non guidé par la fibre optique, est dans ce cas très court de sorte que le système devient peu sensible aux variations de températures. Toutefois cette solution est assez onéreuse en raison de l'utilisation de fibres optiques qui doivent être refroidies compte tenu des hautes températures régnant dans l'enceinte.

Dans la demande de brevet européen 217 708 la demanderesse a également décrit un dispositif purement mécanique de détection d'une feuille de verre qui réagit à une pression exercée par la tranche de la feuille. Dans ce système l'intégrité de la surface du verre est totalement préservée et la détection est parfaitement garantie. Ce dispositif présente toutefois l'inconvénient de comporter des organes mécaniques qui peuvent se gripper. D'autre part, on ne peut que difficilement le déplacer au travers de l'installation. Enfin, il est mal adapté à la détection de feuilles de verre dont le bord avant n'est pas perpendiculaire à la direction d'avancée du vitrage.

Par ailleurs, il est connu du brevet US-A-3 482 952 un dispositif de détection de la position des bords d'un ruban de verre flottant sur un bain d'étain en fusion (procédé float). Du gaz sous pression est émis en direction du bain et un capteur détecte la variation de la contre-pression lorsque le jet gazeux est réfléchi par le ruban de verre et non le bain d'étain. Pour ce faire, le détecteur est monté sur un chariot se déplaçant transversalement à la direction de défilement du ruban, ruban de verre dont la position peut être considérée comme stable pendant des durées relativement longues alors que dans le cas d'une ligne de bombage, la détection doit être instantanée et répétée par exemple toutes les 10 secondes selon la cadence de défilement. De plus, les bords d'un tel ruban sont destinés au rebut, la détection n'a donc nul besoin de ne pas engendrer de défauts optiques.

L'invention a pour but un système très sûr et très précis de détection d'une feuille de verre en mouvement, échauffée au-delà de sa température de déformation, ce système étant d'utilisation plus souple que les détecteurs développés antérieurement.

Comme dans le cas du brevet US-A-3 482 952, ce problème est résolu par le fait que l'on envoie un jet de gaz sous pression, en général d'air comprimé au travers du chemin parcouru par la feuille de verre et qu'on capte la variation de pression du jet lorsque celui-ci est coupé par la feuille de verre, la nouveauté consistant en ce que la pression d'alimentation du jet d'air comprimé est choisie de manière à ce que la variation de pression captée soit comprise entre 10 et 300 Pascals et que ce gaz est envoyé à une température sensiblement égale à la température du verre.

On a donc une détection sans contact matériel et sans organe mécanique, insensible aux variations de température et bien adaptée aux températures régnant dans l'enceinte de formage. En pratique on constate que l'air amené par le soufflage de trempe et/ou l'air aspiré ou soufflé selon les procédés de bombage utilisés ne perturbent pas la détection.

Comme déjà indiqué, la pression d'alimentation du jet d'air comprimé est choisie de manière à ce que la variation de pression captée soit comprise entre entre 10 et 300 Pascals. Des résultats très satisfaisants sont obtenus si la variation de pression est de l'ordre de 200 Pascals. Les pressions de travail sont alors très faibles ce qui supprime avantageusement tout risque de marquage du verre par impact du jet.

De plus, l'air comprimé est envoyé à une température sensiblement égale à la température du verre, c'est-à-dire à la température de la cellule de formage. Ainsi la détection n'a aucune influence sur le vitrage. L'échauffement de l'air comprimé peut être avantageusement obtenu en prévoyant qu'une longueur suffisante du circuit d'alimentation traverse la cellule de formage ; compte-tenu des faibles pressions utilisées, une longueur inférieur à 1 m est généralement suffisante pour une émission continue, ce quine pose pas de problème d'encombrement.

Selon un premier mode de réalisation de l'invention, la détection du jet est effectuée en transmission. Pour celà un émetteur d'air est disposé à proximité du plan de transport des feuilles de verre, le jet d'air comprimé étant situé dans le plan de transport des feuilles de verre, selon une direction essentiellement perpendiculaire à la direction d'avancée des feuilles de verre. La détection est réalisée par un capteur, en l'espèce un transmetteur de pression différentielle dont l'embouchure fait face à l'émetteur et est disposée de l'autre côté du plan de transport. Le jet d'air comprimé est émis en continu ; ainsi dès que le bord avant d'une feuille de verre coupe le courant d'air chaud, le capteur détecte une baisse de pression alors qu'il détecte une surpression dès que le courant est rétabli, c'est-à-dire dès le passage du bord arrière du vitrage.

Un détecteur conforme à ce premier mode de réalisation est par exemple constitué d'un émetteur comportant une source d'air comprimé ou d'autres gaz sous pression, éventuellement une unité de filtrage de l'air - afin d'éviter de projeter des poussières ou gouttelettes d'huile sur le verre - une unité de régulation de la pression, un organe de chauffage de l'air et un tube d'émission. De préférence et pour une pression d'alimentation de l'ordre de 200 Pascals,le tube d'émission a un diamètre intérieur compris entre 3 et 4 mm. Avec une ouverture trop faible, le dispositif devient sensible aux vibrations du système générées notamment par le soufflage de trempe et les déplacements des outillages de bombage. Si par contre le diamètre d'ouverture est par exemple supérieur à 5 mm le temps de réponse de la mesure s'accroît et devient insuffisant. Des diamètres supérieurs, compris par exemple entre 5 et 10 mm peuvent toutefois être utilisés dans un dispositif destiné simplement à détecter la présence d'une feuille de verre, sans autre souci de précision de sa position. Le capteur est constitué par un tube récepteur d'un diamètre d'ouverture identique ou supérieur celui du tube d'émission. Le tube récepteur est connecté à un transmetteur de pression différentielle qui convertit la mesure de pression en un signal électrique enregistré par un voltmère puis le signal est envoyé à un automate programmable.

Selon un autre mode de réalisation également préféré, la détection est obtenue par une mesure en reflexion de la différence de pression. Dans ce cas, l'ensemble du dispositif est situé d'un même côté du plan de transport des feuilles de verre. Comme précédemment, l'émission du jet d'air comprimé est effectuée à proximité du plan de transport des feuilles de verre, le jet d'air comprimé étant dirigé selon une orientation essentiellement perpendiculaire à la direction d'avancée des feuilles de verre. La mesure de la détection est réalisée par un capteur, à savoir un transmetteur de pression différentielle dont le tube d'alimentation est monté coaxialement au tube d'émission d'air comprimé.

Un détecteur conforme à ce second mode de réalisation est par exemple constitué d'un émetteur comportant une source de gaz sous pression, notamment d'air comprimé, une unité de filtrage de l'air, une unité de régulation de la pression, éventuellement un organe de chauffage de l'air et un organe d'émission. De préférence l'organe d'émission est constitué par une buse en forme de couronne montée à l'extrémité d'un tube et au centre de laquelle vient se loger le tube récepteur relié au transmetteur de pression différentielle qui convertit la mesure de pression en un signal électrique envoyé pour traitement vers un automate. Dans ce cas les meilleurs résultats sont observés pour un écart entre la tête de la buse et le verre compris entre 1 à 5 mm selon la pression d'émission de l'air comprimé.

D'autres caractéristiques et éléments avantageux de invention sont décrits ci-après en référence aux dessins annexés qui représentent:

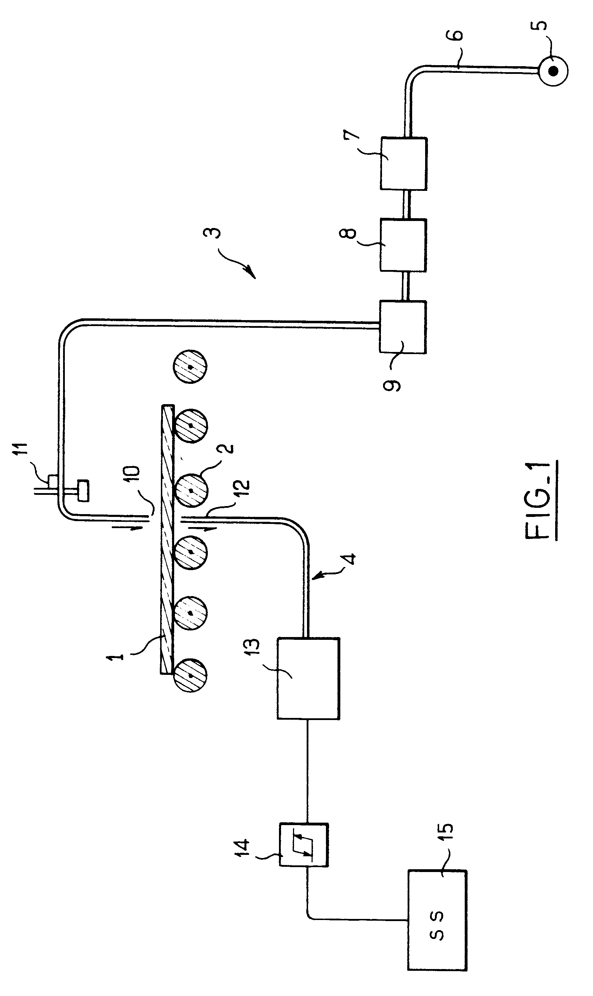

. figure 1 : une vue schématique d'un détecteur conforme au premier mode de réalisation de l'invention,

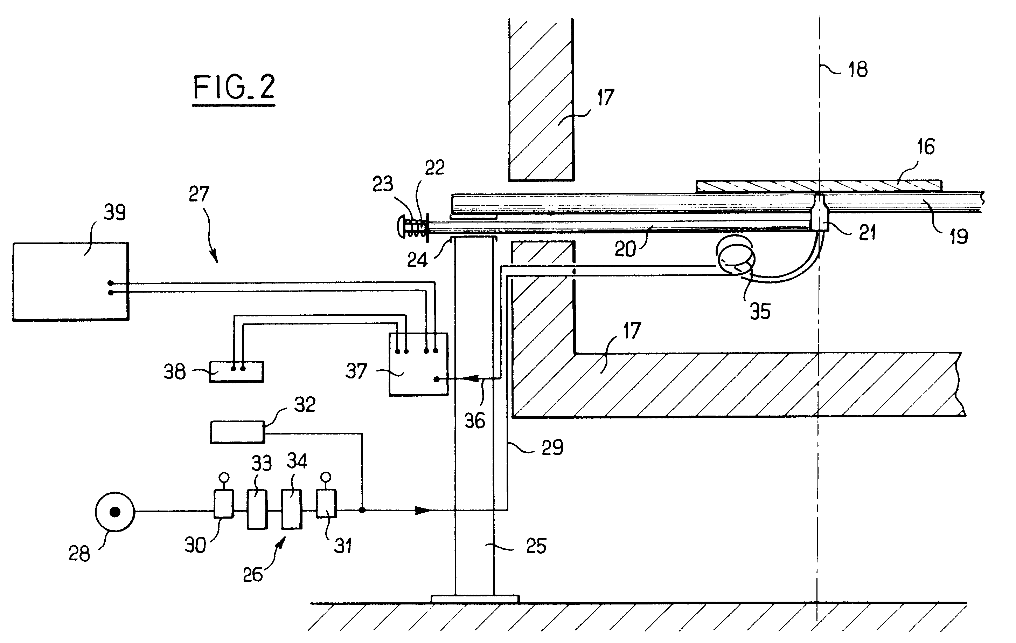

. figure 2 : une vue schématique d'un détecteur conforme au second mode de réalisation,

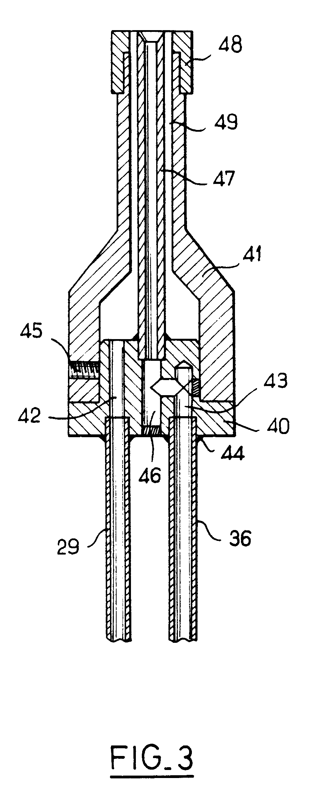

. figure 3 : un détail de la buse d'émission d'un détecteur conforme à la figure 2.

A la figure 1 a été représenté de façon schématique un dispositif de détection pneumatique d'une feuille de verre par une mesure en transmission. Une feuille de verre 1 circule au travers d'un four de réchauffage, véhiculée par un lit de rouleaux moteurs 2. Le four alimente de préférence un dispositif de bombage et/ou de trempe en vue de l'obtention de vitrages automobiles. Perpendiculairement à la direction d'avancée de la feuille de verre est monté un détecteur constitué d'un émetteur 3 et d'un capteur 4, placés de part et d'autre du chemin de la feuille de verre.

L'émetteur 3 comporte une source d'air comprimé 5. L'air circule au travers d'une canalisation 6 et passe par une unité 7 de filtrage, une unité 8 de régulation de la pression et une unité 9 de chauffage dans lequel il est porté à une température sensiblement égale à la température de la feuille de verre (soit de l'ordre de 600-700°C pour un four de bombage). La tête 10 est de préférence constituée par un tube dont le diamètre d'ouverture est par exemple compris entre 3 et 4 mm. La canalisation 6 débouche par une tête 10 à une faible distance de la feuille de verre 1. Cette distance est de préférence comprise entre 2 et 10 mm pour une détection précise du positionnement du verre. Pour une simple indication de la présence de la feuille de verre cette distance peut être accrue jusqu'à environ 150 mm. Un dispositif 11 est prévu pour régler la hauteur de la tête 10 en fonction de l'épaisseur des feuilles de verre.

Sous le plan de transport des feuilles de verre est logé le capteur 4 qui comporte un tube récepteur 12 en position fixe, dont le diamètre est de préférence identique ou supérieur à celui de la tête émettrice 10. Le tube récepteur 12 alimente un transmetteur de pression différentielle 13 qui mesure la variation de pression du jet d'air comprimé lors du passage de la feuille 1 et la transforme en un signal électrique enregistré par un voltmètre 14 et envoyé pour traîtement vers un automate programmable 15.

Tous les dispositifs sensibles à la chaleur, notamment le transmetteur de pression différentielle 13, le voltmètre 14 et l'automate 15 sont placés hors de l'enceinte chaude pour éviter toute détérioration.

Le jet d'air comprimé est émis de préférence sous une pression de 200 Pascals. Dans ces conditions le temps de réponse du système est inférieur au centième de seconde.

La figure 2 est une vue schématique d'un détecteur pneumatique fonctionnant suivant le second mode préféré de réalisation de l'invention.

Une feuille de verre 16 circule au travers d'un four 17 représenté ici en demi-coupe transversale. L'axe du four est figuré par la ligne discontinue 18. Le transport du verre s'effectue sur des rouleaux 19, de préférence en silice, dont les paliers de roulement sont situés hors du four 17. Entre deux rouleaux de transport 19 est monté une gaine support de plus petit diamètre servant de support à la buse détectrice 21. Cette gaine support est de préférence constituée par un tube métallique 22 lui-même entouré d'un tube protecteur 20 en silice monté de façon à permettre la libre dilatation du rouleau 22 par l'intermédiaire du ressort de compensation 23. Il est posé sur un palier 24 monté à l'extrémité d'un porteur 25 fixé au sol.

La buse 21 est reliée à un émetteur 26 et un capteur 27.

L'émetteur 26 comporte une source d'air comprimé 28 qui alimente par la canalisation 29 la buse 21. Le réglage de cette alimentation s'effectue par exemple au moyen de détenteur 30, d'un régulateur de haute précision 31 et d'un micromanomètre 32 à affichage numérique. L'air est épuré par passage dans un préfiltre 33 puis un filtre deshuileur 34.

La canalisation 29 forme une boucle 35 à l'intérieur du four 17. La longueur de cette boucle est suffisante pour que l'air soit échauffé à la température du four. Dans un autre mode de réalisation ici non représenté, la canalisation 29 peut être contenue par le tube métallique 22.

De la buse 21 part également une canalisation de retour 36, empruntant le même chemin que la canalisation 29, qui conduit à un transmetteur 37 qui transforme la mesure de la variation de pression en un signal électrique mesuré par le voltmètre de précision 38. Le signal enregistré est transmis à un automate programmable 39.

Un détail de la buse 21 est représenté à la figure 3. La buse 21 comporte une embase 40 sur laquelle est vissé un corps 41 muni de pas de vis 45 pour la fixation de la buse à l'extrémité de la gaine support. L'embase 40 est pourvue d'alésages 42, 43 au niveau desquels sont soudées les extrémités des canalisations 29 et 36, en prévoyant des pièces de dilatation 44.

L'embase 40 est évidée en son centre pour former un canal 46 et l'ouverture 43 est coudée pour venir déboucher vers celui-ci. La buse comporte également un conduit 47 fixé à une de ses extrémités sur l'embase 40, au niveau du canal 46 et à l'autre de ses extrémités à un chapeau 48. Les parois de ce conduit 47 et du corps 41 forment la buse d'émission en forme de couronne 49. Ainsi le jet d'air comprimé est soufflé au travers d'une couronne annulaire ce qui limite son impact sur le verre. La canalisation 36 reçoit elle, par le conduit 47, le canal 46 et le coude 43 la contrepression induite par le passage d'une feuille de verre.

Avantageusement, l'air comprimé est émis avec une pression de l'ordre de 4 kilopascals, de sorte que pour une distance buse/verre de l'ordre de 2 mm, la différence de pression induite par le passage du vitrage soit de l'ordre de 10 à 200 Pascals. Comme l'air est chaud et que son impact sur le verre est réduit par la forme annulaire de la buse, il ne se produit ainsi aucun marquage de la feuille de verre.

Le montage de la buse sur une gaine support présente différents avantages ; on peut ainsi la déplacer transversalement ou de façon angulaire ceci afin de tenir compte au mieux des différentes formes de vitrages.

L'invention propose ainsi un système de détection de feuilles de verre en mouvement dans un four sûr et fiable, sans risque de marquage du verre.

## Revendications

1. Procédé de détection d'une feuille de verre (1) en mouvement échauffée au-delà de sa température de déformation, selon lequel on envoie un jet de gaz sous pression, notamment d'air comprimé au travers du chemin parcouru par la feuille de verre et on capte la variation de pression du jet lorsque celui-ci est coupé par la feuille de verre, **caractérisé en ce que** la pression d'alimentation du jet de gaz sous pression est telle que la variation de pression captée est comprise entre 10 et 300 Pascals **et que** le jet de gaz sous pression est préchauffé à une température sensiblement identique à celle de la feuille de verre.

2. Procédé selon la revendication 1, **caractérisé en ce que** la variation de pression mesurée est la baisse de pression induite, du côté du plan de transport opposé à l'émetteur du jet, lors du passage d'une feuille de verre.

3. Procédé selon la revendication 1, **caractérisé en ce que** la variation de pression mesurée est la contre-pression induite par la réflexion du jet sur la feuille de verre.

4. Dispositif pour la mise en oeuvre d'une des revendications précédentes comportant un émetteur de gaz sous pression (3, 26) avec une source de gaz sous pression (5, 28), notamment de l'air comprimé, une tête d'émission du gaz (10, 21) et un capteur sous la forme d'un transmetteur de pression différentielle (13, 37), **caractérisé en ce que** l'émetteur (3, 26) comporte en outre une unité (8, 30, 31, 32) de régulation de la pression du gaz et un organe de chauffage (9, 35) du gaz.

5. Dispositif selon la revendication 4, **caractérisé en ce qu'**il comporte en outre une unité (7, 33, 34) de filtrage de l'air.

6. Dispositif selon la revendication 4 ou 5, **caractérisé en ce que** la tête d'émission (10) est constituée par un tube faisant face à un tube récepteur (12) alimentant le transmetteur de pression différentielle (13), et situé de l'autre côté du chemin de transport des feuilles de verre.

7. Dispositif selon la revendication 6, **caractérisé en ce que** le diamètre du tube d'émission (10) est compris entre 3 et 10 mm.

8. Dispositif selon la revendication 7, **caractérisé en ce que** le diamètre du tube d'émission (10) est compris entre 3 et 4 mm.

9. Dispositif selon la revendication 7 ou 8, **caractérisé en ce que** le diamètre du tube récepteur (12) est identique ou supérieur au diamètre du tube d'émission (10).

10. Dispositif selon la revendication 4 ou 5, **caractérisé en ce que** le tube récepteur (47) relié au transmetteur de pression différentielle (37) est monté coaxialement au tube d'alimentation (49) de la tête d'émission (21).

11. Dispositif selon la revendication 10, **caracté-** risé en ce que la tête d'émission (21) est constituée par une buse en forme de couronne (48) montée à l'extrémité d'un tube (41) et au centre de laquelle vient se loger le tube récepteur (47).

## Patentansprüche

1. Verfahren zum Orten einer sich in Bewegung befindenen Glasscheibe (1), die bis über ihre Verformungstemperatur erwärmt wurde, bei dem ein Druckgasstrahl, insbesondere Druckluft, über die von der Glasscheibe durchlaufene Bahn geleitet wird und die Druckänderung des Strahls erfaßt wird, wenn dieser von der Glasscheibe unterbrochen wird, **dadurch gekennzeichnet, daß** der Speisedruck des Druckgasstrahls derart gewählt ist, daß die erfaßte Druckänderung zwischen 10 und 300 Pascal betragt, und daß der Druckgasstrom auf eine Temperatur vorgeheizt wird, die im wesentlichen mit der der Glasscheibe identisch ist.

2. Verfahren nach Anspruch 1, **dadurch gekennzeichnet, daß** die gemessene Druckänderung das Absinken des induzierten Drucks auf der dem Strahlausgang gegenüberliegenden Seite der Transportebene beim Vorbeilaufen einer Glasscheibe ist.

3. Verfahren nach Anspruch 1, **dadurch gekennzeichnet, daß** die gemessene Druckänderung der durch die Reflektion des Strahls an der Glasscheibe induzierte Gegendruck ist.

4. Vorrichtung zur Durchführung des Verfahrens nach einem der vorhergehenden Ansprüche, die einen Druckgasemitter (3, 26) mit einer Druckgasquelle (5, 28), insbesondere für Druckluft, einen Gasemitterkopf (10, 21) und einen Fühler in Form eines Differentialdruckgebers (13, 37) aufweist, **dadurch gekennzeichnet, daß** der Fühler (3, 26) außerdem eine Einheit (8, 30, 31, 32) zum Regulieren des Gasdrucks und ein Heizelement (9, 35) für das Gas aufweist.

5. Vorrichtung nach Anspruch 4, **dadurch gekennzeichnet, daß** sie außerdem einen Luftfiltereinheit (7, 33, 34) aufweist.

6. Vorrichtung nach Anspruch 4 oder 5, **dadurch gekennzeichnet, daß** der Emitterkopf (10) durch ein Rohr gebildet ist, welches einem den Differentialdruckgeber (13) speisenden Empfangsrohr (12) zugewandt ist und auf der anderen Seite der Transportstraße für die Glasscheiben angeordnet ist.

7. Vorrichtung nach Anspruch 6, **dadurch gekennzeichnet, daß** der Durchmesser des Emitterrohrs (10) zwischen 3 und 10 mm liegt.

8. Vorrichtung nach Anspruch 7, **dadurch gekennzeichnet, daß** der Durchmesser des Emitterrohrs (10) zwischen 3 und 4 mm liegt.

9. Vorrichtung nach Anspruch 7 oder 8, **dadurch gekennzeichnet, daß** der Durchmesser des Empfangsrohrs (12) mit dem Durchmesser des Emitterrohrs (10) identisch oder größer als dieser ist.

10. Vorrichtung nach Anspruch 4 oder 5, **dadurch gekennzeichnet, daß** das mit dem Differentialdruckgeber (37) verbundene Empfangsrohr (47) koaxial zum Speiserohr (49) des Emitterkopfes (21) angebracht ist.

11. Vorrichtung nach Anspruch 10, **dadurch gekennzeichnet, daß** der Emitterkopf (21) durch eine kranzförmige Düse (48) gebildet wird, die am Ende eines Rohrs (41) angebracht ist und in deren Zentrum das Empfangsrohr (47) untergebracht wird.

**Claims**

1. Process for detecting a moving glass sheet (1), heated above its deformation temperature, according to which a jet of pressurized gas, notably compressed air, is despatched across the path travelled by the glass sheet and the variation in pressure of the jet when it is cut off by the glass sheet is picked up, characterized in that the feed pressure of the pressurized gas jet is such that the variation in pressure picked up lies between 10 and 300 Pascals and that the pressurized gas jet is preheated to a temperature substantially identical to that of the glass sheet.

2. Process according to Claim 1, characterized in that the pressure variation measured is the pressure drop caused, on the side of the conveying plane remote from the jet emitter, during the passage of a glass sheet.

3. Process according to Claim 1, characterized in that the pressure variation measured is the counterpressure caused by the reflection of the jet from the glass sheet.

4. Device for carrying out the process according to one of the preceding Claims, comprising an emitter for pressurized gas (3, 26) having a source of pressurized gas (5, 28), notably of compressed air, an emission head for the gas (10, 21) and a pick-up in the form of a differential pressure transmitter (13, 37), characterized in that the emitter (3, 26) comprises, in addition, a unit (8, 30, 31, 32) for regulating the pressure of the gas and a heating element (9, 35) for the gas.

5 Device according to Claim 4, characterized in that it comprises, in addition, a unit (7, 33, 34) for filtering air.

6. Device according to Claim 4 or 5, characterized in that the emission head (10) is constituted of a tube facing a receiver tube (12) supplying the differential pressure transmitter (13), and situated on the other side of the conveying path for the glass sheets.

7. Device according to Claim 6, characterized in that the dimeter of the emission tune (10) is from 3 to 10 mm.

8. Device according to Claim 7, characterized in that the diameter of the emission tube (10) is from 3 to 4 mm.

9. Device according to Claim 7 or 8, characterized in that the diameter of the receiver tube (12) is identical to or greater than the diameter of the emission tube (10).

10. Device according to Claim 4 or 5, characterized in that the receiver tube (47), connected to the differential pressure transmitter (37), is mounted coaxially with the feed tube (49) of the emission head (21).

11. Device according to Claim 10, characterized in that the emission head (21) is constituted of a ring-shaped nozzle (48) mounted at the end of a tube (41), and at the centre of which the receiver tube (47) is seated.

FIG_1

FIG.2

FIG. 3